# EUROPEAN PATENT APPLICATION

(11) **EP 4 287 630 A1**
(43) Date of publication of application: **06.12.2023**
(21) Application number: 22177088.6
(22) Date of filing: 02.06.2022
(51) Int. Cl.: H04N 21/414, H04N 21/234

(54) **METHOD FOR PRODUCING A VIDEO STREAM**

(71) Applicant: Pucki GmbH, 82362 Weilheim (DE)
(72) Inventor: VON BRAUN, Max, 82362 Weilheim (DE)
(74) Representative: Reitstötter Kinzebach

(57) **Abstract**

The present invention concerns a method for producing a video stream comprising a sequence of video image frames at a standard video frame rate *SVFR* comprising the steps of:
a) capturing a sequence of camera images of a scenery at a camera frame rate *CFR* which is higher than said standard video frame rate *SVFR,* wherein said sequence of camera images comprises during each standard video frame rate time interval (Δ*T* = 1/*SVFR*) at least a first camera image and a second camera image; and, for each video image frame per video frame rate time interval:
b) defining at least a first frame area and second frame area in said video image frame;
c) forming said first frame area of said video image frame from a combination of corresponding parts of said at least first and second captured camera images; and
d) forming said second frame area of said video image frame from a corresponding part of one of said at least first and second captured camera images.

## Description

The present invention concerns a method for producing a video stream, especially a video stream of a scenery which can comprise fast moving objects.

In video production, a scenery is captured with a camera to provide a video of said scenery which has a predetermined standard video frame rate *SVFR.* For instance, in Western Europe, the standard video frame rate *SVFR for* broadcast is usually 50 frames per second (fps), i.e. 50 Hz. This means that one second of a video stream comprises 50 frames (images), each having a duration of 20 ms. Consequently, the maximum shutter time (exposure time) for each frame essentially corresponds to the duration of each frame, namely *1*/*SVFR = 20 ms.*

For certain applications, it is possible to reduce the shutter time (exposure time per frame) to values lower than the maximum shutter time *1*/*SVFR,* for instance, in order to compensate for a bright environment or to capture specific features of a scenery which are only shown for very short time intervals, as will be described in more detail below. In the context of the present invention, a video frame where the shutter time (exposure time) corresponds to the maximum value *1*/*SVFR* is denoted "unshuttered" while a video frame where the shutter time (exposure time) is lower than the duration corresponding to the standard video frame rate *1*/*SVFR* is denoted "shuttered".

For slow motion applications, video cameras are employed which are able to capture a sequence of frames (camera images) of a scenery at a camera frame rate *CFR* which is higher than the standard frame rate *SVFR.* For instance, for capturing a scenery with a 4x slot motion, a camera operating at a camera frame rate *CFR = 200 fps (200 Hz)* can be employed. Accordingly, during each standard video frame rate time interval *ΔT = 1*/*SVFR = 20 ms,* four frames (camera images) are recorded. If the sequence of recorded images is then displayed at the standard video frame rate *SVFR,* a 4x slow motion effect results.

In certain applications, video streams of sceneries have to be captured where fast moving objects are present. If these objects are small, it can be difficult to visualize the trajectory of such objects for the video or TV viewer. Typical events where small fast moving objects can be part of a scenery are sports events such as a tennis event or a golf event. In these cases, the camera is often operated in an unshuttered mode so that, for instance, when a standard video frame rate of *SVFR = 50 fps* is employed, each frame/image is exposed for 20 ms. Any fast moving object will therefore not be captured as a sharp object but as a motion-blurred object. Nonetheless, the resulting motion blurring extends the actual area of the object in the video frame which helps the viewer to track the object.

However, in certain applications where shuttered images are recorded, i.e. where the actual exposure time is significantly shorter than the standard frame rate time interval *ΔT,* such an option to facilitate visibility of the trajectories of small fast moving objects is no longer available.

Typical examples where shuttered video images are recorded, are known from multiple advertisement broadcasting, typically at sports events. The term "multiple advertisement" relates to different techniques which allows to broadcast/video stream an event where a scenery includes advertisements displays (signboards), typically LED displays, on which a certain type of advertisement is shown for the direct viewers present at the event while different advertisement content on the displays is visible for certain sub-groups of broadcast viewers/video viewers. One technique known as virtual advertisement uses image replacement technologies in video post-production to identify the location of the advertisement display in a video and to selectively replace the image content visible on the LED display with alternative image content. In order to identify the location of the video stream, different techniques are available, where dedicated, pre-defined image content such as a monochromatic image is shown for a brief period of time too short to be noticeable for the direct viewers present at the event. A properly synchronized camera can capture these monochromatic images and in video post-production, the captured monochromatic image in parts of the stream corresponding to the LED display can be replaced by the desired alternative advertisement content. In another technique known as dynamic content multiplication (DCM), different advertisement content for different broadcast viewers or video viewers is actually shown on the physical advertisement displays but only one set of advertisements is actually shown in a manner to be noticeable for the direct viewers present at the event while the other advertisements intended for the broadcast viewers only are shown only for very brief periods of time so that they cannot be seen by the direct viewers at the event. Moreover, according to DCM technology described in international patent application WO 2018/138366 A1, the images not intended for the direct viewers are a combination of image and inverse image and the camera is only synchronized to the presentation of the image.

Accordingly, as technologies such as DCM require the presentation of an advertisement feed for the direct viewers, at least one additional feed for the broadcast viewers consisting of the actual advertisement images directed to at least a first set of broadcast viewers and the corresponding complementary images, during a standard video frame rate time interval *ΔT = 1*/*SVFR,* it is evident that the shutter time (exposure time) for the individual video frames is shorter than the standard frame rate time interval *ΔT.* Consequently, in such applications, the resulting motion blur of fast moving objects is considerably reduced and it is difficult for the video viewers/broadcast viewers to actually trace fast moving objects such as a tennis ball or a golf ball in the final video.

Moreover, the reduced shutter time required for the applications described above result in an increased image noise (visual noise) of the video stream resulting from these camera images.

Therefore, the technical problem underlying the present invention is to provide a method for producing a video stream which allows an improved representation of fast moving objects in videos of a scenery using shuttered cameras, i.e. where the shutter time (exposure time) is shorter than the standard video frame rate time interval. The method of the invention should also improve the image quality of the resulting video stream.

This technical problem is solved by the method of present claim 1. Further embodiments of the method of the present invention are subject to the dependent claims. Accordingly, the present invention concerns a method for producing a video stream comprising a sequence of video image frames at a standard video frame rate *SVFR* comprising the steps of:
a) capturing a sequence of camera images of a scenery at a camera frame rate *CFR* which is higher than said standard video frame rate *SVFR,* wherein said sequence of camera images comprises during each standard video frame rate time interval *(*Δ*T = 1*/*SVFR)* at least a first camera image and a second camera image; and, for each video image frame per video frame rate time interval:
b) defining at least a first frame area and second frame area in said video image frame;
c) forming said first frame area of said video image frame from a combination of corresponding parts of said at least first and second captured camera images; and
d) forming said second frame area of said video image frame from a corresponding part of one of said at least first and second captured camera images.

Accordingly, the present invention suggests to provide a different video processing for different parts (areas) of each video image (video frame) captured by the camera. In at least a first frame area of a video image frame of the video stream, the corresponding frame areas of the at least first and second captured camera images are combined. In a second frame area of the video image frame, only one corresponding frame area of the at least first and second captured camera images is used. Consequently, when any fast moving object in the scenery is present, it will be depicted in the first frame area multiple times, i.e. corresponding to the number of at least first and second captured camera images which are combined to form the respective area of the video image frame. In contrast, if the fast moving object is in the second frame area of the video image frame, only one copy of the object is visible in each final video image frame. Accordingly, when a fast moving object is in the first frame area, the trajectory can easily be followed by a TV or video viewer because each video frame contains multiple copies of the object. In the second frame area, only one copy of a fast moving object in this area is visible per video frame. Thus, the method of the present invention is particularly useful when the second frame area is only a small portion of the total frame area of a video image frame because in most parts of the video image frame, tracing a fast moving object is easily possible and only a small portion of the video image frame is still beset with the problems of prior art. Overall, the method of the present invention results in an improved perception of small fast moving objects in a video stream nonetheless.

Combing multiple camera images each captured with a shorter exposure time than standard video frame rate time interval (Δ*T = 1*/*SVFR*) results in an improved, i.e. reduced, image noise in the first frame area of the final video stream. The poorer image noise of the individual images is therefore limited to the second frame area of the final video stream where only one camera image is used. However, image noise is only noticeable in dark areas of an image so that in bright areas of the second frame area, image noise not a concern. Overall, the image quality of the resulting video is therefore considerably improved.

According to one embodiment of the present invention, the camera frame rate *CFR* is an integer multiple n of said standard video frame rate *SVFR,* with the integer multiple being greater than one. Preferably, the integer multiple *n* is at least 4, so that in areas of a video frame where all camera images captured within a standard video frame rate time interval are combined, n representations, i.e. at least 4 representations, of the fast moving object along its trajectory are visible. In preferred embodiments of the present invention, the integer multiple n is at least 6, more preferably at least 8, i.e. the camera is operated at a frame rate which is at least 6 or 8 time higher that the standard video frame rate *SVFR.*

In the final video stream, each video image frame formed according to the method of the present invention has a duration corresponding to the standard video frame rate time interval *ΔT = 1*/*SVFR.* Accordingly, the camera images captured at the higher camera frame rate *CFR* and having an initially shorter duration (corresponding to the maximum shutter time *Δst = 1*/*CFR* are stretched by the factor *n* to *ΔT = 1*/*SVFR.* When the camera is operated in a shuttered mode, the actual shutter time (exposure time) per camera image can be shorter than the maximum shutter time *Δst = 1*/*CFR.* However, in a preferred embodiment, the camera is operated in an unshuttered mode to maximize the exposure time so that fast moving objects, i.e. even the multiple copies of an object in the first frame area, appear somewhat motion blurred in order to facilitate tracking of the object further.

In one embodiment, especially when the camera capturing the sequence of camera images is stationary, the first and second frame areas defined in step b) can be static in subsequent video image frames. Consequently, "defining at least a first frame area and a second frame area" in step b) can also mean that the first and second frame areas of a particular video image frame correspond to the respective frame areas of the previous video image frame so that no changes have to be effected. This can, for instance, be effected using a vision mixer which receives the sequence of first camera images and the sequence of second camera images as different video inputs. The operator can define the respective frame areas for the final video stream and indicate which video feed or which combination of video feeds shall be shown in the respective frame areas.

The present invention can be implemented using standard broadcasting technology. For instance, in video and TV productions, the so called "SDI" standard has been established for connecting cameras with downstream video post-production and/or broadcasting equipment. Modern video production often employs image resolutions higher than the standard full HD resolution (1920 × 1080 pixel), for instance, an ultra-HD or 4K resolution (3840 × 2160 pixel at 16:9 image ratio or 4096 × 2160 pixel at 19:10 image ratio). If videos are captured at UHD or 4K image resolution and/or in slow motion, the required bandwidth usually exceeds the bandwidth provided by the SDI standard. Therefore, camera manufacturers provide their cameras with multiple SDI outputs allowing transmission of parts of an image and/or sequences of images at different outputs where each output meets the SDI bandwidth requirements. Such outputs can be provided already at the camera head or at a downstream camera control unit CCU or baseband processing unit BPU.

In other embodiments of the present invention, the first and second frame areas are dynamic in subsequent video image frames. Typically, when cameras are moving, panning, tilting of zooming so that the overall scenery changes from one captured camera image to another captured camera image, the first and second frame areas in the final video image frame will have to be adapted as well. Different techniques for dynamically adapting the frame areas defined in each video image frame can be employed. For instance, it is possible to define initial frame areas and to obtain information regarding movement, panning, tilting and zooming of the camera via appropriate sensors and/or control units and to calculate the effect on the appearance of the initially defined frame areas in subsequent video image frames.

As an alternative to calculating the position of the at least first and second frame areas from camera movement data, in many cases the at least first and second frame areas will correspond to distinct features in the scenery captured by the camera. It is therefore possible to use image processing technology to identify the at least first and second frame areas within the image by exploiting, for instance, structural, spectral or other features of the recorded image. For instance, in virtual advertisement technologies, it is important to differentiate background and foreground of a captured camera image. Such techniques have, for instance, been described in US 6,490,006 (Daisho Denki), WO 2012/038009 A1 (Fraunhofer) or WO 2020/021067 A1 (Appario Global Solutions). In one embodiment, the image processing is based on brightness-offset information shown in said scenery, i.e. it is possible to modulate one of the frame areas between subsequent video image frames, e.g. in terms of brightness and to calculate a mask corresponding to the respective frame area from a differential image of the subsequent video image frames. Such a modulation can easily be accomplished when the respective frame area corresponds to an active display, such as an LED display. It should be noted that in such a case, residual image noise in the second frame area is less a concern because an active display usually corresponds to bright areas in the image as has itself a pixel-matrix structure so that even when dark images are shown, image noise is not easily noticeable. Accordingly, in one embodiment of the present invention, said at least first and second frame areas are defined by image processing, for instance by using chromakey information shown in the scenery captured by the camera. Thus, a given frame area in the video image frame can be defined via the appearance of certain chromakey features in the scenery. In subsequent video processing, the pre-defined chromakey can be detected and the associated frame areas can be defined accordingly. Features within the scenery can also be used to identify camera motion such as movement, panning, tilting and zooming, for instance by using so-called "tracking patterns". In another embodiment, the image processing to identify the at least first and second frame areas can be based on complementary pattern information shown in the scenery as described in the above-mentioned international patent application WO 2020/021067 A1.

In order to limit the disturbance of direct viewers by additional visual information present in a scenery, it is preferred that such additional information like chromakeys or tracking patterns be only presented for a short period of time, preferably shorter than the minimum time interval required to be seen, i.e. noticed, by the direct viewers. Preferably, one of said at least first and second captured camera images is synchronized with such additional features required for dynamically adapting the first and second frame areas. As noted above, the method of the present invention is particularly useful when the scenery captured by the camera comprises moving objects, especially fast moving small objects such as tennis balls or golf balls.

Therefore, in one embodiment, the method of the present invention involves a scenery which comprises, at least temporarily, moving objects, in particular, small fast moving objects such as tennis balls or golf balls. Consequently, the scenery is often a sports event such as a tennis match or a golf tournament.

In certain embodiments, the scenery can comprise physical displays showing alternative image content in a time-sliced multiplexed manner where typically one main type of image content is intended to be noticeably visible for direct viewers who are part of the scenery or who are close to the scenery and other image content is intended to be only captured by the camera(s) recording the scenery. The latter type of image content is typically presented only for such a brief period of time that the direct viewers are not able to noticeably view the image content. It can also be presented as a sequence of images and inverse/complementary images which are presented within a short time interval, typically within a time interval shorter than 10 ms, preferably within a time interval not exceeding 3.3 ms.

The physical displays can be active displays such as LED displays or OLED displays which allow for the required rapid change of different image content in a time-sliced multiplexed manner.

The present invention will now be described in more detail with reference to preferred embodiments schematically depicted in the attached drawings. In the drawings:
- Fig. 1: shows a typical broadcast scheme of a tennis event according to prior art;
- Fig. 2: shows a schematic overview of image-capturing and video stream generation according to prior art;
- Fig. 3: shows a video image frame of a video stream obtained with the prior art technique of Fig. 2;
- Fig. 4: shows a schematic overview of image-capturing and video stream generation according to prior art in the context of multi-content advertisement;
- Fig. 5: shows a video image frame of a video stream obtained with the prior art technique of Fig. 4;
- Fig. 6: shows a broadcast scheme of a tennis event according to the present invention in the context of multi-content advertisement;
- Fig. 7: shows the definition of different frame areas according to the method of the present invention;
- Fig. 8: shows a resulting video image frame where a fast moving object is in a second frame area; and
- Fig. 9: shows an image corresponding to Fig. 6 where a fast moving object is in a first frame area.

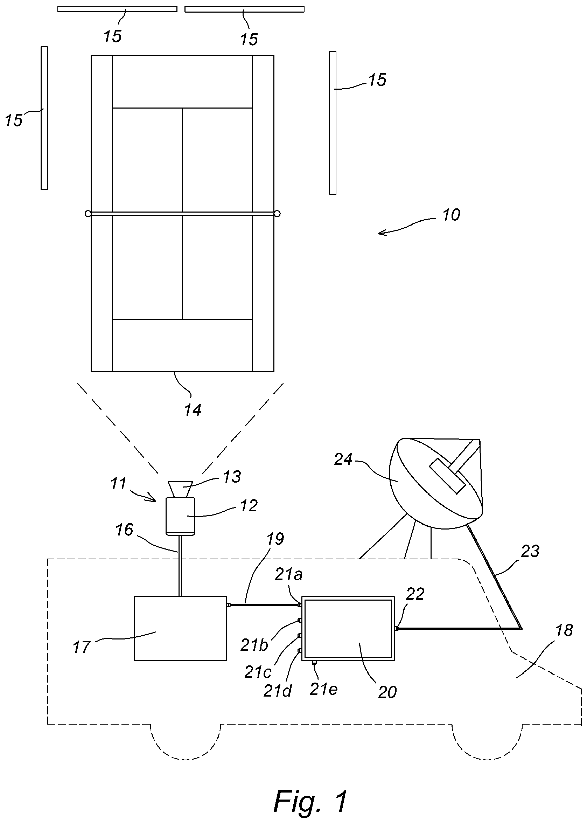

Figure 1 shows a typical broadcast scheme of a tennis event according to prior art. Generally, several cameras are distributed around a tennis court 10. For the sake of simplicity, in the present example only one camera 11 having a camera head 12 and a camera lens 13 mounted to the camera head is shown. Camera 11 is placed behind and above a baseline 14 of tennis court 10. Usually, sports events which are broadcast include various kinds of advertisement and marketing elements. In the present case, several LED signboards 15 are shown surrounding the tennis court. In a conventional setting, the LED signboards 15 show a single type of advertisement, namely an advertisement which can be seen by direct viewers present at the event and also by broadcast viewers because the same type of advertisement is captured by camera 11.

Camera 11 is operating at a standard video frame rate *SVFR,* for instance at a standard video frame rate of 50 fps (frames per second). Especially at events where fast moving objects such as tennis balls are part of a scenery, the camera is usually operated at a shutter time/exposure time which essentially corresponds to the associated standard video frame rate time interval *ΔT = 1*/*SVFR,* i.e. in the example of SVFR = 50 fps at a standard video frame rate time interval of 20 ms. Any fast moving object such as a tennis ball consequently appears as an extended element blurred along its trajectory over the exposure time of 20 ms. This allows broadcast viewers to more easily perceive the movement of the ball because "jumps" of the ball between consecutive video image frames are avoided.

In the example of Figure 1, a data transmission line 16 connects camera 11 with a camera control unit (CCU) 17 installed in an OB van 18. A raw video output line 19 connects the camera control unit 17 with a vision mixer 20 which has multiple inputs 21a - 21e for video data so that graphic, text or video inserts or overlays can be added to the raw video captured by camera 11. The final video stream generated by the vision mixer (and optional other video processing equipment not shown in Fig.1) is then provided at a video output 22 of the vision mixer as an output video stream which can, for instance, be broadcast at the standard video frame rate via an output transmission line 23 and a satellite dish 24 installed on top of the OB van 18 to the broadcast viewers.

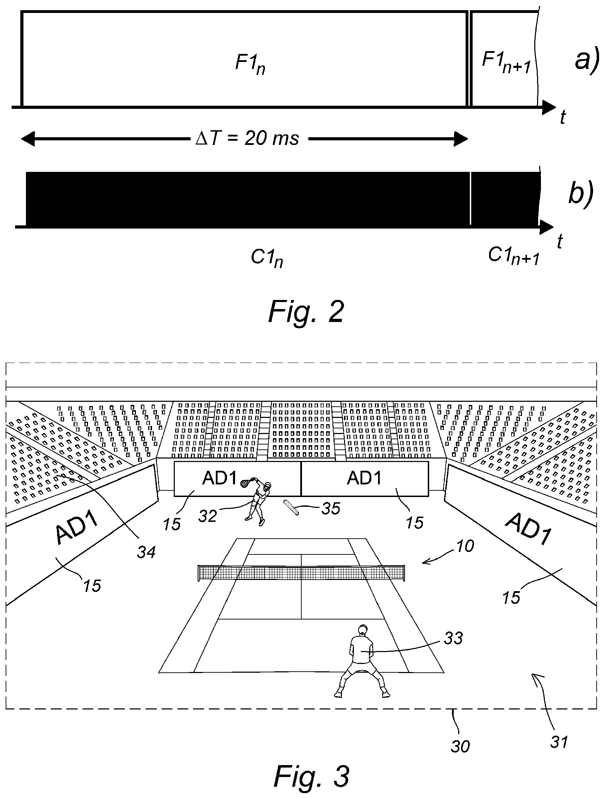

Fig. 2 shows a time line of a typical image capturing scheme employed in the state of the art system of Fig. 1 for generating the video stream of a sports event where advertisements are shown on LED signboards. Specifically, Fig. 2a) shows the sequence of images (image frame) presented on the LED signboards 15. During each standard frame rate time interval *ΔT* (in the present example: 20 ms), only one image of the advertisement feed (also denoted "venue feed") *F1ₙ* intended for all viewers (i.e. direct viewers present at the event and broadcast viewers) is presented. The sub-index *n* denotes the respective image frame shown during the 20 ms time interval. In the subsequent frame rate time interval, the next image frame F_{*n*+1̅} is shown, etc. The images on the LED signboards can remain unchanged, for instance if a static advertisement video sequence shown, or can be different, e.g. sequences of an advertisement video shown on the signboard. Fig. 2b) shows the video capturing process of camera 11. In a conventional tennis production the camera operates unshuttered, i.e. the shutter time corresponds to the standard video frame rate time interval *ΔT.*Consequently, one image frame *C1ₙ* of the video generated by camera 11 is captured per standard video frame rate time interval. The next image frame *C1ₙ₊₁* is captured in the following standard video frame rate time interval.

Fig. 3 shows a typical video image frame of the resulting video shown to broadcast viewers when captured with the scheme of Fig.2. The video image frame has an outer image border 30 and an inner image region 31 corresponding to the camera image captured during a standard video frame rate time interval *ΔT.* In the present example, camera 11 of Fig. 1 captures a scenery which comprises the tennis court 10. In the present example, one tennis player 32 is in the process of serving while the second player 33 is expecting the serve. LED signboards 15 which show advertisements, (denoted "AD1" in Fig. 3) intended to be seen by the direct viewers (spectators) 34 are installed around tennis court 10 and are therefore part of the scenery shown in the image frame of Fig. 3. The same advertisement is shown to all broadcast viewers. As explained in connection with Fig. 2, the shutter time of camera 11 corresponds to the standard frame rate time interval of 20 ms so that the fast moving tennis ball 35 is no longer a sharp object but motion-blurred along part of its trajectory. This effect is intended in conventional recording of tennis matches to increase visibility of the tennis ball for the broadcast viewers because it avoids "jumps" of the tennis ball 35 from one video image frame to the next.

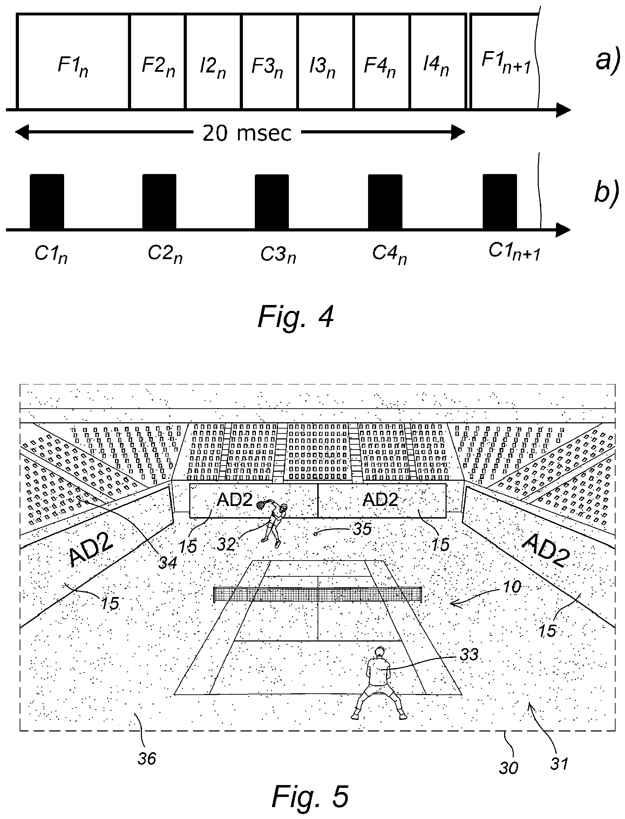

Figure 4 shows a time line of a typical image capturing scheme employed in a state of the art system for generating video streams of a sports event where advertisements are shown on LED signboards 15 in the context of multi-content advertisement. Multi-content advertisement in the sense of the present invention means that on one and the same advertisement signboard which is part of a scenery captured by the camera, different types of image content are shown for different sub-sets of viewers, for instance the direct viewers present at the event and one or more different sets of broadcast viewers. Therefore, the dedicated image content (e.g. different advertisements) can be presented simultaneously throughout the event to the direct viewers and different sets of broadcast viewers, for instance to broadcast viewers in different countries where each can see an advertisement in their native language. To effect multi-content advertisement, different technologies have been developed in the past. For instance, technologies denoted "virtual advertisement" use image processing technology to identify the location of the physical advertisement signboards in a scenery of the video stream and selectively replace the area of the detected signboards by alternative image content for different sub-sets of broadcast viewers resulting in different final videos being produced of the event where each shows the same scenery but the advertisement boards show different advertisements. This technique still faces problems with properly identifying background and foreground (for instance, players moving before the signboards), etc. In another technology denoted "dynamic content multiplication" described in international patent application WO 2018/138366 A1, every type of advertisement of the multi-content advertisement is actually shown on the physical display but only one type long enough so that it can be perceived by the direct viewers present at the event (the so-called venue feed). Additional alternative advertisements are shown in a time-sliced multiplexed manner on the physical display for only brief periods of time too short to be noticed by the direct viewers. Additionally, in order to avoid the direct viewers experiencing flickering of the physical LED signboards during the event, international patent application WO 2018/138366 A1 suggests to present the additional image content (the so-called "parallel feeds") not only as a sequence of the respective images but as a sequence of images and corresponding inverse images so that the resulting inserted image is a grey image which reduces the disturbance of the direct viewers. A camera is employed which captures images synchronized to the particular image content feeds shown on the LED signboards but do not capture the inverse images shown on the LED signboards. Thus alternative image content in the sense of the present invention can be actual advertisements shown on the physical displays which are captured by synchronized cameras or image content which is only intended to identify the location of the signboards in the captured camera images for replacing the image content of the signboards by alternative image content in video post-production. The alternative image contents shown on the physical displays can in this case be for instance monochromatic chromakey images or pattern images.

In Fig. 4, the time line of Figure 4a) shows the sequence of images presented on the LED signboards 15. During each standard frame rate time interval *ΔT* (again assuming a standard video frame rate of 50 fps, the standard frame rate time interval corresponds to 20 ms), four different advertisement feeds are shown, namely a venue feed *F1ₙ* intended to be seen by the direct viewers and any set of broadcast viewers who view a video/TV broadcast of a video stream using camera images synchronized to the presentation of the venue feed. Again, the sub-index *n* denotes the respective image frames shown during the 20 ms time interval and the sub-index *n*+*1* denotes the image frames of the subsequent frame rate time interval. In contrast to the embodiment of Figure 2, in the context of multi-content advertisement, additional advertisement feeds *F2ₙ, F3ₙ* and *F4ₙ* are shown on the LED signboards 15. In order to minimize disturbance of the viewing experience of the direct viewers 34 by including parallel feeds in a time-sliced multiplexed manner into the displaying of the venue feed intended for the direct viewers, according to the method presented in international patent application WO 2018/138366 A1, each parallel feed is presented as a combination of the actual parallel feed image and its corresponding inverse/complementary image *I2ₙ, I3ₙ, I4ₙ* respectively. While camera is synchronized with part of the venue feed *F1ₙ* and the respective parallel feeds *F2ₙ, F3ₙ* and *F4ₙ* the inverse/complementary images *I2ₙ, I3ₙ* and *I₄* are not captured by the camera. Consequently, a clear image of the alternative advertisements shown on LED signboards 15 is recorded while the direct viewers 34 present at the event can only perceive the venue feed *F1ₙ* with additionally raised grey levels due to the resulting combinations of F2 and 12, F3 and I3 and F4 and I4 respectively.

Fig. 4b) shows the video capturing process of the camera. In the context of multi-content advertisement, a camera operating at a higher frame rate than the standard frame rate is employed. In the example of Fig. 4, where four advertisement feeds are shown on the physical displays present in the scenery, a camera operating at four times the standard frame rate is employed, i.e. a camera image is captured every 5 ms. The camera is synchronized such that the venue feed advertisement *F1ₙ* and each of the additional advertisement feeds intended for broadcast viewers only *F2ₙ, F3ₙ* and *F4ₙ* are captured by the camera. In the present example, as not only additional advertisement content but also the corresponding inverse images of the advertisement feeds intended for broadcast viewers only are shown on the physical displays, the maximum shutter time is not 5 ms (corresponding to 1/CFR = 1/200 Hz) but only 2.5 ms to ensure that the corresponding inverse images are not captured. From the corresponding captured images, four phase-shifted video streams are generated, i.e. a first video stream for the venue feed advertisement comprising camera images *C1ₙ, G1ₙ₊₁, G1ₙ₊₂,* etc., a second video stream comprising the scenery when the second advertisement F2 intended for broadcast viewers only is shown on the physical displays (signboards 15), comprising camera images *C2ₙ, C2ₙ₊₁, G2ₙ₊₂,* etc. Correspondingly, third and fourth video streams are formed on the basis of camera images C3 and C4, respectively.

Due to the shorter shutter times, the image noise is higher compared to the prior art technology of Figures 1-3 where only one advertisement is shown on the signboards 15.

Fig. 5 shows a typical video image frame of the resulting video which is based on camera images C2 captured with the scheme of Fig. 4. Reference signs, except where otherwise noted, correspond to reference signs used in connection with Fig. 3 above. As this video frame defined by image border 30 and inner image region 31 corresponds to camera images which have been synchronized with an alternative advertisement content shown on signboards 15, the signboards 15 depict "AD2" as a representation of the advertisement feed based on images F2ₙ shown on the signboards. As a further difference to Fig. 3, it is noted that due to the much shorter shutter time of the camera, the fast moving ball 35 appears as a sharp image. Accordingly, as the next image in the video stream based on camera images C2 is also 20 ms apart from the previous video image frame, ball 35 will "jump" a considerable distance in consecutive video image frames making it harder for the broadcast viewers to follow the trajectory of the ball. Moreover, again due to the much shorter shutter time, the image noise of the resulting videos is higher as compared to the video resulting from the scheme of Figures 2 and 3. The higher image noise has been exemplified (in exaggerated form) in Fig. 5 by image noise 36, represented as dots overlaying the entire image.

The present invention is based on the observations exemplified in Fig. 5, namely that in the context of multi-content advertisement broadcasts, the image noise is higher compared to traditional videos of sports events and small fast moving objects are harder to follow by the broadcast viewers. In order to mitigate these problems, the present invention suggests to overlay multiple camera images in areas where the short shutter times of Fig. 4 are not essential and to use images of only one camera image captured with the short shutter time of Fig. 5 only in frame areas where the short shutter time is actually essential. In the context of multi-content advertisement, the short shutter times are only essential in areas which correspond to the LED signboards 15 in the scenery in order to clearly discriminate between advertisements intended for one set of broadcast viewers from advertisements intended for other types of broadcast viewers.

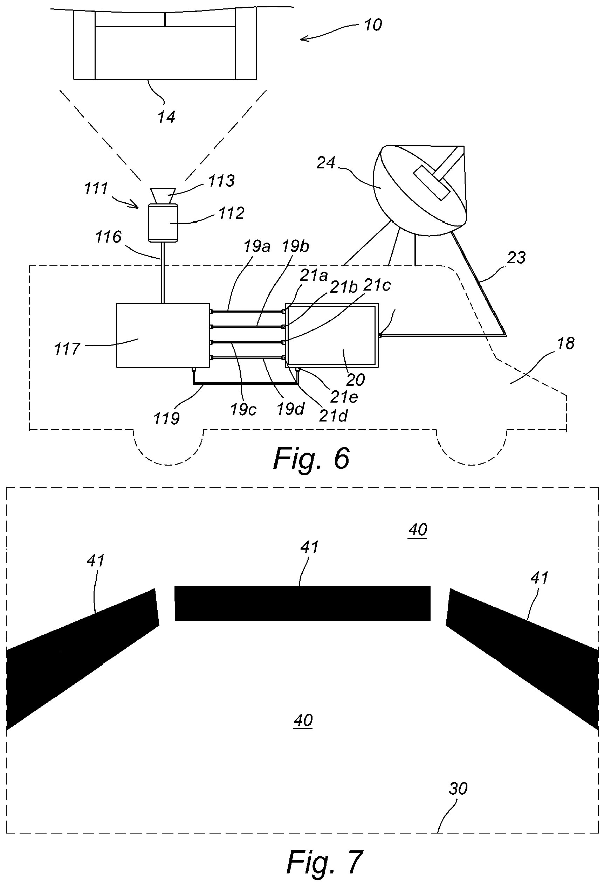

Fig. 6 shows a setup for broadcasting a tennis event according to the method of the present invention. Features and elements of Fig. 6 which correspond to features and elements already described in connection with Fig. 1 are denoted by the same reference number and related features are designated by the same reference number augmented by 100. Accordingly, the tennis court 10 corresponds to the tennis court of Fig. 1 and, although shown only partially, also has the same signboards 15 which, in the present case, do not only show one type of advertisement but four advertisement feeds in a time-sliced multiplexed manner as described in connection with Fig. 4. Camera 111 of the embodiment of Fig. 6 is a high-speed camera, for example a commercially available slow motion camera, capable of recording at a camera frame rate which is at least four times the standard frame rate. In the present example, we again assume that the video stream is produced at a standard video frame rate SVFR = 50 fps and the camera is consequently capable of operating at a camera frame rate CFR of 200 fps (200 Hz). The camera again has a camera body 112 and a camera lens 113 and is connected via a high bandwidth data transmission line 116 to camera control unit 117 installed in OB van 18. The camera control unit 117 provides four raw output lines 19a, 19b, 19c, 19d which correspond to four different phase-shifted sequences of camera images. The camera captures an image every 5 ms, i.e. four images during each video frame rate time interval of 20 ms. The first camera images captured during each video frame rate time interval form the first video feed 19a, the second camera images form the second video feed 19b, etc. Consequently, lines 19a-19d show essentially the same video stream but video data on lines 19b, 19c and 19d are phase-shifted by 5 ms, 10 ms, 15 ms with respect to the video signal on line 19a, respectively. In conventional video recording, the signal captured by camera 111 is used for slow motion video and the SDI outputs 19a-19d are provided to accommodate legacy low-bandwidth data connections which are often already installed at sports events. In conventional slow motion video processing, these data lines 19a-19d are typically fed to a slow motion server which re-combines the different feeds to generate a slow motion video at the standard video frame rate. Camera control units 117 also provide a live feed output line 119 which already corresponds to the combined signal on lines 19a-19d as a 50hz video signal output and which therefore already comprises all captured camera images. It is noted that camera control unit 117 can also be a baseband processing unit typically installed in the OB van 18. Alternatively, the functionality of the camera control unit 117 can essentially already be implemented in the camera head 112 of camera 111 so that in other embodiments, lines 19a-19d and 119 are already provided at the camera head 112.

In the context of the present invention, the individual phase-shifted outputs 19a-19d as well as the live output 119 are fed to a vision mixer 20 typically also installed in the OB van 18. The vision mixer 20 allows defining the individual frame areas according to the method of the present invention which will be described in more detail. The final video generated by the vision mixer and optional other video processing equipment not shown here is then provided as an output video stream at a standard video frame rate (in the present example 50 fps) via output line 23 which can, for instance, be broadcast via satellite dish 24 installed on top of the OB van 18.

Therefore, according to the method of the present invention, it is suggested to define at least two different frame areas in each video image frame which are treated separately. Fig. 7 shows a mask for defining frame areas in the example of Fig. 5. As shown in Fig. 7, the first frame area 40 covers the scenery outside the LED displays 15 in Fig. 5, while the second frame area 41 covers the area of the LED displays 15 in Fig. 5 where different advertisement content is shown. In Fig. 7, the first frame area 40 is shown in white, while the second frame area 41 is shown in black. Accordingly, the mask defined by frame areas of Fig. 7 corresponds to different video post-processing the different areas by vision mixer 20 or any other suitable video processing unit. According to the method of the present invention, the first frame area 40 is formed from the corresponding frame areas of camera images *C1ₙ, C2ₙ, C3ₙ* and *C4ₙ*, while the second frame area 41 is formed by the corresponding frame area of only one of the camera images *C1ₙ, C2ₙ, C3ₙ* or *C4ₙ,* in the context of the example shown in the figures specifically of camera images *C2n.*

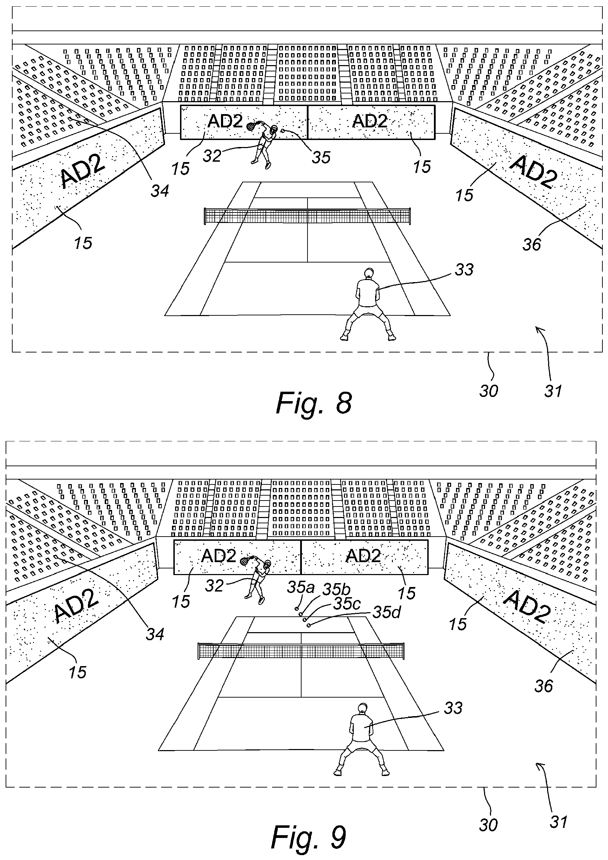

Figures 8 and 9 show two typical examples of image frames resulting from the corresponding video stream. The reference signs, except if otherwise noted, correspond to the reference signs used in connection with Figure 5. Again, similarly to Fig. 5, it is assumed that the video image frames are from a video intended to be broadcast or otherwise presented to a set of broadcast viewers who shall see the advertisement "AD2" shown in the advertisement feed F2ₙ on the LED signboards 15. The corresponding advertisements are shown with the corresponding synchronized camera images C2ₙ (see Fig. 4).

In Figure 8, tennis ball 35 is within the second frame area (frame area 41 in Fig. 7) where only one image (here image C2ₙ) is used to form the frame area. Therefore, tennis ball 35 appears as a single object. Within the second frame area 41, the image noise is still high, corresponding to the image noise of Figure 5. In the first frame area (frame area 40 in Fig. 7) of the image, however, the image noise is considerably reduced because all four corresponding areas of the camera images *C1ₙ, C2ₙ, C3ₙ* and *C4ₙ* are overlayed. Overall, especially when the second frame area 41 is small compared to the first frame area 40, the image quality of the resulting video is considerably improved.

Fig. 9 shows a video frame corresponding to Fig. 8 but captured shortly after the frame of Fig. 8 has been captured, i.e. at a time when the tennis ball is in the first frame area. Accordingly, as four images captured by camera 111 are overlayed, each image captured with the short shutter time of the scheme of Figure 4, the video frame image shows four copies 35a, 35b, 35c, 35d of the tennis ball at different positions of its trajectory corresponding to the image capturing times of camera images C1ₙ, C2ₙ*,* C3ₙ and C4ₙ in the scheme of Figure 4. Consequently, the "jumps" of fast moving objects such as tennis ball 35 in consecutive video image frames are considerably reduced and the broadcast viewer can more easily follow the ball along its trajectory.

The tracing of the trajectory of the tennis ball can be even more facilitated if the representation of the tennis ball 35, 35a, 35b, 35c, 35d is not as sharp as depicted in Figures 8 and 9 but slightly motion blurred along the trajectory. This effect will depend on the speed of the tennis ball and can be enhanced if the camera is operated at maximum permitted exposure/shutter time.

### List of Reference Signs

- 10: tennis court
- 11: camera
- 12: camera head
- 13: camera lens
- 14: baseline of tennis court
- 15: LED signboard
- 16: data transmission line
- 17: camera control unit (CCU)
- 18: OB van
- 19: raw video output line of CCU 17
- 19a-19d: raw video output lines of CCU 117
- 20: vision mixer
- 21a-e: video inputs of vision mixer
- 23: video output line of vision mixer
- 24: satellite dish

- 30: outer image boarder
- 31: inner image region
- 32: serving tennis player
- 33: returning tennis player
- 34: spectators, direct viewers
- 35: tennis ball
- 36: image noise
- 40: first frame area
- 41: second frame area
- 111: high speed camera
- 112: camera head
- 113: camera lens
- 116: high bandwidth data transmission line
- 117: camera control unit (CCU)
- 119: live feed output line of CCU

## Claims

1. A method for producing a video stream comprising a sequence of video image frames at a standard video frame rate *SVFR* comprising the steps of:
a) capturing a sequence of camera images of a scenery at a camera frame rate *CFR* which is higher than said standard video frame rate *SVFR,* wherein said sequence of camera images comprises during each standard video frame rate time interval (Δ*T* = *1*/*SVFR*) at least a first camera image and a second camera image; and, for each video image frame per video frame rate time interval:
b) defining at least a first frame area and second frame area in said video image frame;
c) forming said first frame area of said video image frame from a combination of corresponding parts of said at least first and second captured camera images; and
d) forming said second frame area of said video image frame from a corresponding part of one of said at least first and second captured camera images.

2. The method according to claim 1, wherein said camera frame rate *CFR* is an integer multiple *n* of said standard video frame rate *SVFR,* with *n* > *1* (*CFR* = *n* · *SVFR).*

3. The method according to claim 1, wherein *n* is at least 4.

4. The method according to one of claims 1 to 3, wherein said at least first and second frame areas are static in subsequent video image frames.

5. The method according to claim 4, wherein said at least first and second frame areas are defined using a vison mixer.

6. The method according to one of claims 1 to 3, wherein said at least first and second frame areas are dynamic in subsequent video image frames.

7. The method according to claim 6, wherein said at least first and second frame areas are defined by image processing.

8. The method according to claim 7, wherein said image processing is based on chromakey information shown in said scenery.

9. The method according to claim 7, wherein said image processing is based on complementary pattern information shown in said scenery.

10. The method according to claim 7, wherein said image processing is based on brightness-offset information shown in said scenery.

11. The method according to one of claims 1 to 10, wherein said scenery comprises moving objects.

12. The method according to one of claims 1 to 11, wherein said scenery is a sports event.

13. The method according to one of claims 1 to 12, wherein said scenery comprises physical displays showing alternative image content in a time-sliced multiplexed manner.

14. The method according to claim 13, wherein said physical displays are active displays such as LED displays or OLED displays.
